(19) **Europäisches Patentamt / European Patent Office / Office européen des brevets**

(11) **EP 3 570 845 B2**

(12) **NOUVEAU FASCICULE DE BREVET EUROPEEN**
Après la procédure d'opposition

(45) Date de publication et mention de la décision concernant l'opposition:
**15.01.2025 Bulletin 2025/03**

(45) Mention de la délivrance du brevet:
**08.09.2021 Bulletin 2021/36**

(21) Numéro de dépôt: 18704052.2

(22) Date de dépôt: 22.01.2018

(51) Classification Internationale des Brevets (IPC):
*A61K 31/70* $^{(2006.01)}$   *C03C 25/00* $^{(2018.01)}$
*C09J 4/00* $^{(2006.01)}$   *C09J 133/02* $^{(2006.01)}$

(52) Classification Coopérative des Brevets (CPC):
(C-Sets disponibles)
**C09J 4/00; C03C 25/321; C09J 133/02**   (Cont.)

(86) Numéro de dépôt international:
**PCT/FR2018/050149**

(87) Numéro de publication internationale:
**WO 2018/134544 (26.07.2018 Gazette 2018/30)**

(54) **COMPOSITION D'ENCOLLAGE POUR LAINE MINERALE A BASE DE SUCRE HYDROGENE ET PRODUITS ISOLANTS OBTENUS**

SCHLICHTEZUSAMMENSETZUNG FÜR MINERALWOLLE AUF BASIS VON HYDRIERTEM ZUCKER UND ERHALTENE ISOLIERENDE PRODUKTE

SIZING COMPOSITION FOR MINERAL WOOL BASED ON A HYDROGENATED SUGAR AND INSULATING PRODUCTS OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.01.2017 FR 1750514**

(43) Date de publication de la demande:
**27.11.2019 Bulletin 2019/48**

(73) Titulaire: **SAINT-GOBAIN ISOVER**
**92400 Courbevoie (FR)**

(72) Inventeurs:
• **SALOMON, Pierre**
  **92400 Courbevoie (FR)**
• **CHENAL, Marion**
  **93100 Montreuil (FR)**

(74) Mandataire: **Saint-Gobain Recherche**
  **41 Quai Lucien Lefranc**
  **93300 Aubervilliers (FR)**

(56) Documents cités:
EP-A1- 0 873 976       EP-A2- 2 033 992
US-A- 5 763 524        US-A1- 2013 032 749
US-A1- 2013 140 481    US-A1- 2016 177 057
US-A1- 2016 359 521    US-B2- 8 889 033

EP 3 570 845 B2

(52) Classification Coopérative des Brevets (CPC):
(Cont.)

C-Sets
**C09J 4/00, C08F 222/02;**
**C09J 133/02, C08K 3/32**

**Description**

La présente invention se rapporte au domaine des produits d'isolation, thermiques et/ou acoustiques, à base de laine minérale, notamment de verre ou de roche, et d'un liant organique exempt de formaldéhyde.

L'invention concerne plus particulièrement une composition d'encollage apte à réticuler thermiquement pour former ledit liant organique, qui est à base d'au moins un sucre hydrogéné, au moins un agent de réticulation polyfonctionnel choisi parmi les acides organiques polycarboxyliques ou les sels de ces acides, et leurs anhydrides, et d'acide hypophosphoreux, un procédé de fabrication de produits isolants à base de fibres minérales liées par un liant organique utilisant cette composition d'encollage et les produits isolants qui en résultent.

La fabrication de produits d'isolation à base de laine minérale comprend généralement une étape de fabrication de la laine elle-même, qui peut être mise en œuvre par différents procédés, par exemple selon la technique connue du fibrage par centrifugation interne ou externe.

La centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour former une nappe de fibres (ou laine minérale).

La centrifugation externe consiste, quant à elle, à déverser la matière en fusion à la surface périphérique externe d'organes rotatifs appelés rotors, d'où la matière en fusion est éjectée sous l'action de la force centrifuge. Des moyens d'étirage par un courant gazeux et de collecte sur un organe de réception sont également prévus.

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la réticulation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, pour éviter la formation de chaînes longues, peu hydrosolubles, qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée (à son tour dégradée au moins partiellement en ammoniac) qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues et se fondent sur l'emploi d'un polymère d'acide carboxylique, notamment d'acide acrylique, et d'un composé hydroxylé.

Dans US 5 340 868, l'encollage comprend un polymère polycarboxylique, un β-hydroxylamide et un acide carboxylique monomérique au moins trifonctionnel.

Il a été proposé des compositions d'encollage comprenant un polymère polycarboxylique, un polyol et un catalyseur, lequel catalyseur est un catalyseur contenant du phosphore (US 5 318 990, US 5 661 213, US 6 331 350, US 2003/0008978), un fluoroborate (US 5 977 232) ou bien un cyanamide, un dicyanamide ou une cyanoguanidine (US 5 932 689).

Il a aussi été décrit des compositions d'encollage comprenant une alcanolamine renfermant au moins deux groupements hydroxyles et un polymère polycarboxylique (US 6 071 994, US 6 099 773, US 6 146 746) associé à un copolymère (US 6 299 936).

Dans US 2002/0188055, la composition d'encollage comprend un polymère polycarboxylique, un polyol et un tensioactif cationique, amphotère ou non ionique.

Dans US 2004/0002567, la composition d'encollage renferme un polymère polycarboxylique, un polyol et un agent de couplage de type silane.

Dans US 2005/0215153, il est décrit un encollage formé à partir d'un pré-liant contenant un polymère d'acide carboxylique et d'un polyol, et d'une dextrine en tant que co-liant.

D'autres solutions de remplacement des résols se fondent sur l'emploi d'un polyacide monomérique et d'un polyol.

WO 2006/120523 décrit une composition d'encollage qui comprend (a) un poly(alcool vinylique), (b) un agent de réticulation multifonctionnel choisi parmi les polyacides non polymériques ou leurs sels, les anhydrides ou un polyaldéhyde non polymérique et (c) éventuellement un catalyseur, le rapport pondéral (a):(b) variant de 95:5 à 35:65 et le pH étant au moins égal à 1,25.

Dans WO 2008/053332, il est proposé une composition d'encollage qui comprend un adduit (a) d'un polymère de sucre et (b) d'un agent de réticulation multifonctionnel choisi parmi les polyacides monomériques ou leurs sels, et les anhydrides, qui est obtenu dans des conditions telles que le rapport pondéral (a):(b) varie de 95:5 à 35:65.

US2013/140481 et US2016/177057 décrivent des compositions d'encollage à base de sucres non-hydrogénés.

La demanderesse a proposé des compositions d'encollage contenant un sucre hydrogéné ou un mélange de sucres hydrogénés contenant au moins 25 % en poids de maltitol et un agent de réticulation polyfonctionnel, polymérique ou non polymérique, éventuellement un catalyseur (WO 2010/029266 et WO 2013/014399). Dans ces compositions, le catalyseur préféré est l'hypophosphite de sodium, le phosphite de sodium et les mélanges de ces composés. Cependant, du fait du caractère hygroscopique de ce type de catalyseur, il s'ensuit que les produits d'isolation à base de laine minérale obtenus à partir des compositions d'encollage le contenant ont une forte tendance à absorber l'eau.

La présente invention a pour but de proposer une composition d'encollage améliorée qui permet d'obtenir des produits d'isolation à base de laine minérale possédant une capacité de rétention d'eau plus faible que ceux décrits dans les demandes précitées de la demanderesse.

Un autre but est de fournir une composition d'encollage qui permet d'améliorer les propriétés mécaniques des produits isolants après vieillissement dans des conditions humides, notamment leur résistance à la traction.

Pour atteindre ces buts, la présente invention propose une composition d'encollage selon la revendication 1.

Par « sucre hydrogéné » on entend ici l'ensemble des produits résultant de la réduction, de quelque manière que ce soit, d'un sucre choisi parmi les monosaccharides, les oligosaccharides et les polysaccharides linéaires, cycliques ou ramifiés, et les mélanges de ces produits, notamment les hydrolysats d'amidon.

Les hydrolysats d'amidon qui peuvent être utilisés pour obtenir le mélange de sucres hydrogénés conforme à l'invention sont obtenus de manière connue en soi, par exemple par hydrolyse enzymatique et/ou acide d'un ou plusieurs amidons. Le degré d'hydrolyse de l'amidon est généralement caractérisé par l'équivalent en dextrose, aussi dénommé « Dextrose-Equivalent » (DE) en anglais, défini par la relation suivante :

$$DE = 100 \times \left( \frac{\text{nombre de liaisons glycosidiques rompues}}{\text{nombre de liaisons glycosidiques dans l'amidon initial}} \right)$$

Le DE des hydrolysats d'amidon varie selon le mode d'hydrolyse utilisé (type d'enzyme(s) par exemple) et le degré d'hydrolyse : la distribution en produits de différents degrés de polymérisation peut varier dans une large mesure.

Les hydrolysats d'amidon préférés ont un DE compris entre 5 et 99, et avantageusement entre 10 et 80.

L'hydrogénation du sucre tel que défini précédemment peut être effectuée par les méthodes connues opérant dans des conditions de pression d'hydrogène et de température élevées, en présence d'un catalyseur choisi dans les groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le sucre ou le mélange de sucres (hydrolysat d'amidon) en polyols correspondants.

Bien que n'étant pas préférée, l'hydrogénation peut être mise en œuvre en l'absence de catalyseur d'hydrogénation, en présence d'une source d'hydrogène autre que le gaz hydrogène, par exemple un borohydrure de métal alcalin tel que le borohydrure de sodium.

A titre d'exemples de sucres hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon, notamment commercialisés par la société Roquette sous la dénomination Polysorb®.

Le sucre hydrogéné conforme à l'invention possède une masse molaire moyenne en nombre inférieure à 100000 g/mol, de préférence inférieure à 50000 g/mol, avantageusement inférieure à 5000 g/mol, et mieux encore supérieure à 180 g/mol.

Le sucre hydrogéné conforme à l'invention peut contenir des sucres réducteurs en proportion faible qui n'excède pas 5 % en poids de matières sèches, de préférence 1 % et mieux encore 0,5 %. Le sucre hydrogéné ne contient généralement pas de sucres réducteurs.

De préférence, on utilise le maltitol et les mélanges comprenant du maltitol et des produits d'hydrogénation d'hydrolysats d'amidon, le maltitol dans lesdits mélanges étant avantageusement majoritaire, c'est-à-dire représentant plus de 50 % en poids. Le maltitol est particulièrement préféré.

L'agent de réticulation polyfonctionnel est apte à réagir avec les groupes hydroxyles du sucre hydrogéné sous l'effet de la chaleur pour former des liaisons esters qui conduisent à l'obtention d'un réseau polymérique dans le liant final. Ledit réseau polymérique permet d'établir des liaisons au niveau des points de jonction des fibres dans la laine minérale.

L'agent de réticulation polyfonctionnel est choisi parmi les acides organiques polycarboxyliques ou les sels de ces acides, et leurs anhydrides.

Par « acide organique polycarboxylique », on entend un acide organique comprenant au moins deux fonctions carboxyliques, de préférence au plus 300, avantageusement au plus 70, et mieux encore au plus 15 fonctions carboxyliques.

L'acide organique polycarboxylique peut être un acide non polymérique ou polymérique ; il présente une masse molaire moyenne en nombre en général inférieure ou égale à 50000 g/mol, de préférence inférieure ou égale à 10000 g/mol et avantageusement inférieure ou égale à 5000 g/mol.

L'acide organique polycarboxylique non polymérique est un acide linéaire, ramifié ou non, saturé ou insaturé, un acide cyclique ou un acide aromatique.

L'acide organique polycarboxylique non polymérique peut être un acide dicarboxylique, par exemple l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique ; un acide tricarboxylique, par exemple l'acide citrique, l'acide tricarballylique, l'acide 1,2,4-butanetricarboxylique, l'acide aconitique, l'acide hémimellitique, l'acide triméllitique et l'acide trimésique ; un acide tétracarboxylique, par exemple l'acide 1,2,3,4-butanetétracarboxylique et l'acide pyroméllitique.

La composition d'encollage peut comprendre un ou plusieurs acides dicarboxyliques, tricarboxyliques et/ou tétracarboxyliques.

De préférence, l'acide organique polycarboxylique non polymérique est l'acide citrique.

A titre d'exemple d'acide organique polycarboxylique polymérique, on peut citer les homopolymères d'acide carboxylique insaturé tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique et l'acide $\alpha,\beta$-méthylèneglutarique, ou de monoester d'acide dicarboxylique insaturé, tel qu'un maléate ou un fumarate d'alkyle en $C_1$-$C_{10}$; les copolymères d'acides carboxyliques insaturés, en particulier des acides précités, notamment les copolymères acide (méth)acrylique-acide maléique; et les copolymères d'au moins un acide carboxylique insaturé, notamment d'acide carboxylique insaturé précité et d'au moins un monomère vinylique tel que le styrène substitué ou non par des groupements alkyle, hydroxyle ou sulfonyle, ou par un atome d'halogène, le (méth)acrylonitrile, le (méth)acrylamide ou non par des groupements alkyle en $C_1$-$C_{10}$, les alkyl (méth)acrylates, notamment le (méth)acrylate de méthyle, le (méth)acrylate d'éthyle, le (méth)acrylate de n-butyle et le (méth)acrylate d'isobutyle, le (méth)acrylate de glycidyle, le butadiène et un ester vinylique, notamment l'acétate de vinyle.

De préférence, la composition d'encollage comprend au moins un acide organique polycarboxylique non polymérique ayant une masse molaire moyenne en nombre inférieure ou égale à 1000 g/mol, de préférence inférieure ou égale à 750 g/mol et avantageusement inférieure ou égale à 500 g/mol, éventuellement en mélange avec au moins un acide organique polymérique.

L'agent de réticulation polyfonctionnel peut être un anhydride, notamment l'anhydride maléique, l'anhydride succinique ou l'anhydride phtalique.

L'agent de réticulation polyfonctionnel particulièrement préféré est l'acide citrique.

Dans la composition d'encollage, le sucre hydrogéné représente 10 à 90 % du poids du mélange constitué par le sucre hydrogéné et l'agent de réticulation polyfonctionnel, de préférence 20 à 85 %, avantageusement 30 à 80 % et mieux encore 45 à 65 %.

La composition d'encollage comprend aussi de l'acide hypophosphoreux qui joue le rôle de catalyseur de la réaction d'estérification entre le sucre hydrogéné et l'agent de réticulation polyfonctionnel, et contribue à un meilleur ajustement de la température de début de réticulation de la composition d'encollage.

L'acide hypophosphoreux est introduit dans la composition d'encollage à raison de 0,1 part à 10 parts en poids pour 100 parts en poids du sucre hydrogéné et de l'agent de réticulation polyfonctionnel, de préférence 1 à 5 parts en poids.

Avantageusement, on utilise l'acide hypophosphoreux sous la forme d'une solution aqueuse à 50 % en poids dudit acide.

La composition d'encollage ne contient pas d'hypophosphite de sodium.

La composition d'encollage est une composition aqueuse qui présente de préférence une teneur en matières sèches comprise entre 3 et 30 % en poids, de préférence de 4 à 20 % en poids, le sucre hydrogéné, l'agent de réticulation polyfonctionnel et l'acide hypophosphoreux représentant ensemble au moins 70 %, de préférence au moins 80 % des matières solides de la composition d'encollage.

La composition d'encollage conforme à l'invention peut comprendre en outre les additifs conventionnels ci-après dans les proportions suivantes calculées sur la base de 100 parts en poids de sucre hydrogéné et d'agent de réticulation polyfonctionnel :

- 0 à 5 parts de silane, en particulier un aminosilane ou un epoxysilane,
- 0 à 20 parts d'huile, de préférence 4 à 15 parts
- 0 à 5 parts d'un agent hydrophobe, en particulier un silicone,
- 0 à 20 parts d'un polyol différent des sucres hydrogénés, en particulier le glycérol ou un polyglycérol.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes.

La préparation de la composition d'encollage est effectuée par simple mélange des constituants précités.

Lorsque l'agent de réticulation polyfonctionnel est un polyacide non polymérique, il peut être avantageux de soumettre la composition d'encollage à un traitement thermique de manière à faire réagir une partie du sucre hydrogéné avec ledit polyacide. Grâce à ce traitement thermique, la teneur en polyacides libres de faible masse molaire dans la composition d'encollage est réduite, ce qui a pour effet de limiter les émissions gazeuses générées lors de la cuisson de l'encollage dans l'étuve. Le traitement thermique est effectué à une température pouvant aller de 40 à 150°C.

La composition d'encollage est destinée à être appliquée sur des fibres minérales, notamment des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°C, et avantageusement supérieure ou égale à 140°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre. Ces produits présentent une couleur blanche particulièrement avantageuse.

En outre, les produits isolants présentent une grande résistance au développement de microorganismes, notamment de moisissures, qui est due au caractère non-fermentescible du sucre hydrogéné.

Les exemples qui suivent permettent d'illustrer l'invention sans toutefois la limiter.

Dans ces exemples, on mesure :

- la résistance en traction, selon la norme ASTM C 686-71T, sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en Newton) de l'échantillon et on calcule la résistance en traction RT définie par le rapport de la force de rupture F à la masse de l'échantillon (en Newton/gramme).

La résistance en traction est mesurée immédiatement après la fabrication (RTf), après un vieillissement accéléré dans un autoclave à une température de 105°C sous 100 % d'humidité relative pendant 15 minutes (RT15) ou dans les conditions du test « Florida », et après un vieillissement dans un hangar de stockage fermé pendant 1 mois (vieillissement naturel).

Le test « Florida » est effectué dans les conditions suivantes : le produit est placé dans une enceinte climatique et soumis à 21 fois les 4 cycles de température et d'humidité relative tels que définis dans le tableau ci-après, les variations de température et d'humidité relative étant opérées à vitesses constantes.

| Cycle | Temps (heure) | Température (°C) | Humidité relative (%) |
|-------|---------------|-----------------|------------------------|
| 1 | 0 à 1,5 | 25 à 55 | 80 à 95 |
| 2 | 1,5 à 4 | 55 | 95 à 35 |
| 3 | 4 à 6 | 55 | 35 à 20 |
| 4 | 6 à 8 | 55 à 25 | 20 à 80 |

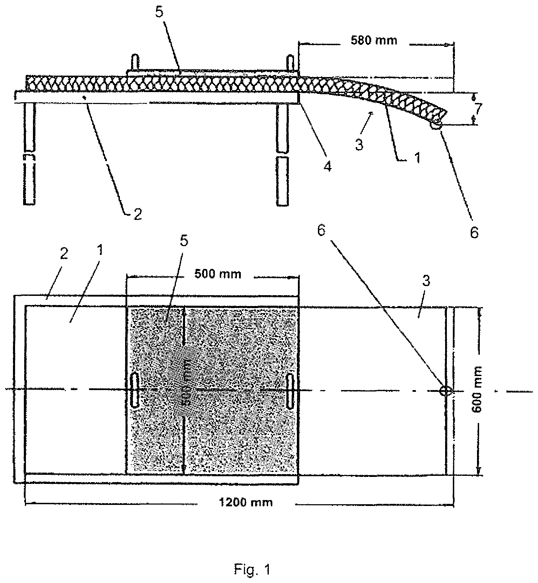

- la flexion selon une méthode interne de la demanderesse exposée schématiquement sur la Fig. 1 dans laquelle la partie supérieure est une vue en coupe du dispositif de test approprié et la partie inférieure est une vue de dessus de ce même dispositif.

Les produits testés sont sous la forme d'un échantillon de 1200 mm x 600 mm découpé dans le produit d'isolation. L'échantillon 1 est placé sur la partie supérieure de la surface 2 de taille adaptée, à l'horizontale, de façon qu'une extrémité 3 s'étende librement au-delà du bord de la table 4 sur une longueur de 580 mm. Ensuite, une plaque de charge 5 est disposée sur l'échantillon de telle sorte que le bord de la plaque 5 affleure le bord de la surface 4, la plaque ayant une dimension de 500 mm x 500 mm et une masse de 2765 g correspondant à une charge de 0,109 kN/m$^2$. Sur l'échantillon 1, 4 mesures sont effectuées au centre 6, sur les faces supérieure et inférieure. La valeur moyenne des 4 mesures représente la flexion 7 (en mm) de l'échantillon. La flexion donnée dans les tableaux 1 et 2 est une valeur moyenne mesurée sur 4 échantillons.

- l'absorption d'eau dans les conditions suivantes : on place 20 à 50 mg d'échantillon (masse initiale) dans la nacelle d'une balance contenue dans une enceinte climatique maintenue à 25°C et à une humidité relative égale à 75 % ou 95 %. On mesure la masse de l'échantillon lorsque cette dernière est stabilisée (masse finale). L'absorption d'eau (en %) est calculée selon la formule suivante :

$$(\text{masse finale} - \text{masse initiale}) / \text{masse initiale} \times 100$$

## EXEMPLES 1 A 3

On prépare des compositions d'encollage comprenant les constituants figurant dans le tableau 1 exprimé en parts pondérales.

Les compositions d'encollage sont préparées en introduisant les constituants dans un récipient contenant de l'eau, sous une agitation vigoureuse. L'extrait sec des compositions d'encollage est égal à 5 % en poids.

Les compositions d'encollage sont utilisées pour former des produits d'isolation à base de laine de verre.

On fabrique de la laine de verre par la technique de la centrifugation interne dans laquelle la composition de verre fondu est transformée en fibres au moyen d'un outil dénommé assiette de centrifugation, comprenant un panier formant la chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage. La finesse des fibres de verre, mesurée par la valeur de leur micronaire dans les conditions décrites dans la demande de brevet FR 2 840071, est égale à 15,8 l/min. Il existe une relation de correspondance entre la valeur micronaire et le diamètre moyen des fibres.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande ayant une largeur de 2,40 m, équipé de caissons d'aspiration internes qui retiennent la laine minérale sous forme d'un feutre ou d'une nappe à la surface du convoyeur. Le convoyeur circule ensuite dans une étuve maintenue à 240°C où les constituants de l'encollage polymérisent pour former un liant. Le produit isolant obtenu présente une masse volumique égale à 27,0 kg/m³, une épaisseur d'environ 80 mm immédiatement après la fabrication et une perte au feu égale à 5,5 %.

Les propriétés des produits d'isolation sont données dans le tableau 1.

Les produits d'isolation fabriqués avec les compositions d'encollage des exemples 1 et 2 selon l'invention présentent de meilleures propriétés que le produit de l'exemple 3 comparatif contenant de l'hypophosphite de sodium.

La résistance en traction est plus élevée dans les exemples 1 et 2 que dans l'exemple 3 comparatif, aussi bien avant vieillissement (RTf) qu'après vieillissement en autoclave (RT15) ou dans les conditions du « test Florida ».

La flexion des produits selon les exemples 1 et 2, plus faible que celle de l'exemple comparatif 3, correspond à une rigidité plus importante des produits.

L'absorption d'eau des produits selon les exemples 1 et 2 est inférieure à celle de l'exemple comparatif 3, notamment en conditions d'humidité relative très élevée (95 %).

## EXEMPLES 4 A 8

On procède dans les conditions décrites dans les exemples 1 à 3 modifiées en ce que les compositions d'encollage renferment les constituants décrits dans le tableau 2, dans des proportions exprimées en parts pondérales, et en ce que la laine de verre possède une valeur micronaire égale à 17,1 l/min, ce qui correspond à un diamètre moyen des fibres de verre plus élevé que dans les exemples précédents.

La résistance en traction est plus élevée dans les exemples 5 à 6 que dans les exemples 7 et 8 comparatifs, aussi bien avant vieillissement (RTf) qu'après vieillissement en autoclave (RT15) ou vieillissement naturel.

Tableau 1

| | Ex. 1 | Ex. 2 | Ex. 3 (comp.) | Ex. 4 (comp.) | Ex. 5 (comp.) |
|---|---|---|---|---|---|
| **Composition d'encollage (parts pondérales)** | | | | | |
| Maltitol | 48 | 48 | 48 | 24 | 24 |
| Roquette glucose syrup 4779 | 0 | 0 | 0 | 31 | 31 |
| Acide citrique | 52 | 52 | 52 | 45 | 45 |
| Acide hypophosphoreux | 3 | 5 | 0 | 5 | 0 |
| Hypophosphite de sodium | 0 | 0 | 5 | 0 | 5 |
| Huile minérale[1] | 7 | 7 | 7 | 7 | 7 |
| Aminosilane[2] | 0,5 | 0,5 | 0,5 | 0,5 | 0,5 |
| Silicone[3] | 1,5 | 1,5 | 1,5 | 1,5 | 1,5 |
| **Résistance en traction (N/g)** | | | | | |
| Avant vieillissement (RTf) | 5,38 | 5,21 | 5,12 | 4,25 | 4,43 |
| Après vieillissement | | | | | |
| - autoclave (RT15) | 4,21 | 3,93 | 3,60 | 3,54 | 3,42 |
| - « test Florida » | 3,93 | 3,65 | 3,38 | 3,46 | 3,36 |
| **Flexion (mm)** | | | | | |
| Initiale | 38 | 59 | 56 | - | - |
| Après vieillissement « test Florida » | 153 | 162 | 230 | - | - |
| **Absorption d'eau (%)** | | | | | |
| à 75 % d'humidité relative | 0,86 | 0,93 | 1,09 | - | - |
| à 95 % d'humidité relative | 2,50 | 2,50 | 3,30 | - | - |
| [1] commercialisé sous la référence HW88 par SASOL | | | | | |

(suite)

| Absorption d'eau (%) | | | | | |
|---|---|---|---|---|---|
| (2) commercialisé sous la référence A1100 par MOMENTIVE | | | | | |
| (3) commercialisé sous la référence BS5137 par WACKER | | | | | |

Les résultats du tableau 1 montrent que le remplacement du catalyseur de l'état de la technique (hypophosphite de sodium) par le catalyseur de l'invention (acide hypophosphoreux) améliore les performances mécaniques, et en particulier la résistance en traction avant et après vieillissement uniquement lorsque le liant est essentiellement à base de sucre hydrogéné (maltitol) (voir comparaison des exemples 1 et 2 par rapport à l'exemple comparatif 3). Lorsque le liant contient un mélange de sucre hydrogéné et de sucres réducteurs, le remplacement de l'hypophosphite de sodium par l'acide hypophosphoreux n'a pas d'effet significatif sur la résistance en traction des produits obtenus (voir comparaison des exemples comparatifs 4 et 5.

Tableau 2

| | Ex. 6 | Ex. 7 | Ex. 8 | Ex. 9 (comp.) | Ex. 10 (comp.) |
|---|---|---|---|---|---|
| **Composition d'encollage (parts pondérales)** | 48 | 48 | 48 | 48 | 48 |
| Maltitol | 52 | 52 | 52 | 52 | 52 |
| Acide citrique | 1 | 3 | 5 | 0 | 0 |
| Acide hypophosphoreux | 0 | 0 | 0 | 5 | 0 |
| Hypophosphite de sodium | 0 | 0 | 0 | 0 | 5,6 |
| Acide phosphorique | 7 | 7 | 7 | 7 | 7 |
| Huile minérale[1] | 0,5 | 0,5 | 0,5 | 0,5 | 0,5 |
| Aminosilane[2] | 1,5 | 1,5 | 1,5 | 1,5 | 1,5 |
| Silicone[3] | | | | | |
| **Résistance en traction (N/g)** | | | | | |
| Avant vieillissement (RTf) | 5,80 | 6,08 | 6,21 | 5,37 | 5,50 |
| Après vieillissement autoclave (RT15) | 4,38 | 4,44 | 4,72 | 4,02 | 2,72 |
| Après vieillissement naturel | 4,55 | 4,85 | 5,19 | 4,76 | 4,09 |
| [1] commercialisé sous la référence HW88 par SASOL | | | | | |
| [2] commercialisé sous la référence A1100 par MOMENTIVE | | | | | |
| [3] commercialisé sous la référence BS5137 par WACKER | | | | | |

Les résultats du tableau 2 ci-dessus montrent que l'amélioration de la résistance en traction des produits d'isolation dépend de la concentration de l'acide hypophosphoreux : plus celle-ci est importante, meilleure est la résistance en traction des produits (voir exemples 6, 7 et 8).

**Revendications**

1.   Composition d'encollage pour des produits isolants à base de laine minérale, notamment de roche ou de verre, **caractérisée en ce qu'**elle comprend

- au moins un sucre hydrogéné,
- au moins un agent de réticulation polyfonctionnel choisi parmi les acides organiques polycarboxyliques ou les sels de ces acides, et leurs anhydrides, et
- de l'acide hypophosphoreux
et qui est exempte de sucres réducteurs ou contient au plus 10 % en poids de sucres réducteurs
la composition d'encollage ne contenant pas d'hypophosphite de sodium.

2.   Composition selon la revendication 1, **caractérisée en ce que** le sucre hydrogéné est choisi parmi les produits d'hydrogénation de monosaccharides, oligosaccharides et polysaccharides linéaires, cycliques ou ramifiés.

3.   Composition selon la revendication 1 ou 2, **caractérisée en ce que** le sucre hydrogéné est l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

4.   Composition selon la revendication 3, **caractérisée en ce que** le sucre hydrogéné est le maltitol, ou un mélange comprenant du maltitol et des produits d'hydrogénation d'hydrolysats d'amidon, de préférence renfermant plus de 50 % en poids de maltitol.

5.   Composition d'encollage selon l'une des revendications précédentes, **caractérisée par le fait qu'**elle présente une teneur en matières solides comprise entre 3 et 30 % en poids, de préférence de 4 à 20 % en poids, le sucre hydrogéné, l'agent de réticulation polyfonctionnel et l'acide hypophosphoreux représentant ensemble au moins 70 %, de préférence au moins 80 % des matières solides de la composition d'encollage.

6.   Composition selon la revendication 1, **caractérisée en ce que** l'acide organique polycarboxylique comprend au moins deux fonctions carboxyliques, de préférence au plus 300 fonctions carboxyliques, avantageusement au plus 70 et mieux encore au plus 15.

7.   Composition selon la revendication 6, **caractérisée en ce que** l'acide organique polycarboxylique est choisi parmi les acides organiques polycarboxyliques non polymériques linéaires, ramifiés ou non, saturés ou insaturés, les acides cycliques et les acides aromatiques.

8.   Composition selon la revendication 7, **caractérisée en ce que** l'acide organique polycarboxylique est choisi parmi les acides dicarboxyliques, notamment l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, en particulier contenant au moins un atome de bore ou de chlore, l'acide tétrahydrophtalique et ses dérivés, en particulier contenant au moins un atome de chlore, l'acide isophtalique, l'acide téréphtalique, l'acide mésaconique et l'acide citraconique, les acides tricarboxyliques, notamment l'acide citrique, l'acide tricarballylique, l'acide 1,2,4-butanetricarboxylique, l'acide aconitique, l'acide hémimellitique, l'acide triméllitique et l'acide trimésique, et les acides tétracarboxyliques, notamment l'acide 1,2,3,4-butanetétracarboxylique et l'acide pyroméllitique.

9.   Composition selon la revendication 1, **caractérisée en ce que** l'acide organique polycarboxylique est choisi parmi les acides organiques polycarboxyliques polymériques, en particulier les homopolymères d'acide carboxylique insaturé ou de monoester d'acide dicarboxylique insaturé, les copolymères d'acide carboxyliques insaturés, et les copolymères d'au moins un acide carboxylique insaturé et d'au moins un monomère vinylique.

10.  Composition selon la revendication 9, **caractérisée en ce que** l'acide carboxylique insaturé est l'acide (méth) acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthylèneglutarique et les monoesters d'acide dicarboxyliques insaturés, et le monomère vinylique est le styrène substitué ou non par des groupements alkyle, hydroxyle ou sulfonyle, ou par un atome d'halogène, le (méth)acrylonitrile, le (méth)acrylamide substitué ou non par des groupements alkyle en $C_1$-$C_{10}$, les alkyl (méth)acrylates, le (méth)acrylate de glycidyle, le butadiène et un ester vinylique.

11.  Composition selon l'une des revendications 1 à 10, **caractérisée en ce que** le sucre hydrogéné représente 10 à 90 % du poids du mélange constitué par le sucre hydrogéné et l'agent de réticulation polyfonctionnel, de préférence 20 à 85 %, avantageusement 30 à 80 % et mieux encore 45 à 65 %.

12.  Composition selon l'une des revendications 1 à 11, **caractérisée en ce que** l'acide hypophosphoreux représente 0,1 part à 10 parts en poids pour 100 parts en poids du sucre hydrogéné et de l'agent de réticulation polyfonctionnel, de préférence 1 à 5 parts.

13.  Composition selon l'une des revendications 1 à 12, **caractérisée en ce qu'**elle comprend en outre les additifs ci-après dans les proportions suivantes calculées sur la base de 100 parts en poids de sucre hydrogéné et d'agent de réticulation polyfonctionnel :

> - 0 à 5 parts de silane, en particulier un aminosilane ou un epoxysilane,
> - 0 à 20 parts d'huile, de préférence 4 à 15 parts

- 0 à 5 parts d'un agent hydrophobe, en particulier un silicone,
- 0 à 20 parts d'un polyol différent des sucres hydrogénés, en particulier le glycérol ou un polyglycérol.

14. Procédé de fabrication d'un produit isolant à base de fibres minérales liées par un liant organique, comprenant

- l'application d'une composition aqueuse d'encollage selon l'une quelconque des revendications précédentes sur des fibres minérales,
- l'évaporation de la phase solvant de la composition aqueuse d'encollage et le durcissement thermique du résidu non volatile de la composition.

15. Produit isolant à base de fibres minérales liées par un liant organique, obtenu par le procédé selon la revendication 14.

**Patentansprüche**

1. Schlichtezusammensetzung für isolierende Produkte auf Basis von Mineralwolle, besonders Stein- oder Glaswolle, **dadurch gekennzeichnet, dass** sie Folgendes umfasst:

- mindestens einen hydrierten Zucker,
- mindestens ein polyfunktionales Vernetzungsmittel, ausgewählt aus organischen Polycarbonsäuren oder Salzen dieser Säuren und ihren Anhydriden, und
- unterphosphorige Säure

und die frei von reduzierenden Zuckern ist oder zu höchstens 10 Gew.-% reduzierende Zucker beinhaltet, wobei die Schlichtezusammensetzung kein Natriumhypophosphit beinhaltet.

2. Zusammensetzung nach Anspruch 1, **dadurch gekennzeichnet, dass** der hydrierte Zucker ausgewählt ist aus Hydrierungsprodukten von linearen, cyclischen oder verzweigten Monosacchariden, Oligosacchariden und Polysacchariden.

3. Zusammensetzung nach Anspruch 1 oder 2, **dadurch gekennzeichnet, dass** es sich bei dem hydrierten Zucker um Erythrit, Arabit, Xylit, Sorbit, Mannit, Idit, Maltit, Isomaltit, Lactit, Cellobit, Palatinit, Maltotrit und Hydrierungsprodukte von Stärkehydrolysaten handelt.

4. Zusammensetzung nach Anspruch 3, **dadurch gekennzeichnet, dass** es sich bei dem hydrierten Zucker um Maltit oder ein Gemisch handelt, umfassend Maltit und Hydrierungsprodukte von Stärkehydrolysaten, das vorzugsweise zu mehr als 50 Gew.-% Maltit enthält.

5. Schlichtezusammensetzung nach einem der vorstehenden Ansprüche, **dadurch gekennzeichnet, dass** sie einen Feststoffgehalt zwischen 3 und 30 Gew.-%, vorzugsweise von 4 bis 20 Gew.-%, aufweist, wobei der hydrierte Zucker, das polyfunktionale Vernetzungsmittel und die unterphosphorige Säure zusammen zu mindestens 70 %, vorzugsweise zu mindestens 80 % die Feststoffe der Schlichtezusammensetzung ausmachen.

6. Zusammensetzung nach Anspruch 1, **dadurch gekennzeichnet, dass** die organische Polycarbonsäure mindestens zwei Carbonsäurefunktionen, vorzugsweise höchstens 300 Carbonsäurefunktionen, vorteilhafterweise höchstens 70 und noch besser höchstens 15 Carbonsäurefunktionen, umfasst.

7. Zusammensetzung nach Anspruch 6, **dadurch gekennzeichnet, dass** die organische Polycarbonsäure aus linearen, verzweigten oder unverzweigten, gesättigten oder ungesättigten nichtpolymeren organischen Polycarbonsäuren, cyclischen Säuren und aromatischen Säuren ausgewählt ist.

8. Zusammensetzung nach Anspruch 7, **dadurch gekennzeichnet, dass** die organische Polycarbonsäure aus Dicarbonsäuren, besonders Oxalsäure, Malonsäure, Bernsteinsäure, Glutarsäure, Adipinsäure, Pimelinsäure, Suberinsäure, Azelainsäure, Sebacinsäure, Apfelsäure, Weinsäure, Tartronsäure, Asparaginsäure, Glutaminsäure, Fumarsäure, Itaconsäure, Maleinsäure, Traumatinsäure, Camphersäure, Phthalsäure und deren Derivaten, insbesondere beinhaltend mindestens ein Bor- oder Chloratom, Tetrahydrophthalsäure und deren Derivaten, insbesondere beinhaltend mindestens ein Chloratom, Isophthalsäure, Terephthalsäure, Mesaconsäure und Citraconsäure, Tricarbonsäuren, besonders Zitronensäure, Tricarballylsäure, 1,2,4-Butantricarbonsäure, Aconitsäure, Hemimellitsäure, Trimellitsäure und Trimestersäure und Tetracarbonsäuren, besonders 1,2,3,4-Butantetracarbonsäure und Pyromellitsäure, ausgewählt ist.

9. Zusammensetzung nach Anspruch 1, **dadurch gekennzeichnet, dass** die organische Polycarbonsäure aus polymeren organischen Polycarbonsäuren, insbesondere ungesättigten Carbonsäure- oder ungesättigten Dicarbonsäuremonoester-Homopolymeren, ungesättigten Carbonsäure-Copolymeren und Copolymeren aus mindestens einer ungesättigten Carbonsäure und mindestens einem Vinylmonomer ausgewählt ist.

10. Zusammensetzung nach Anspruch 9, **dadurch gekennzeichnet, dass** die ungesättigte Carbonsäure (Meth)acrylsäure, Crotonsäure, Isocrotonsäure, Maleinsäure, Zimtsäure, 2-Methylmaleinsäure, Fumarsäure, Itaconsäure, 2-Methylitaconsäure, $\alpha,\beta$-Methylenglutarsäure und Monoester von ungesättigten Dicarbonsäuren ist und das Vinylmonomer mit Alkyl-, Hydroxyl- oder Sulfonylgruppen oder mit einem Halogenatom substituiertes oder unsubstituiertes Styrol, (Meth)acrylnitril, mit $C_1$-$C_{10}$-Alkylgruppen substituiertes oder unsubstituiertes (Meth)acrylamid, Alkyl(meth)acrylate, Glycidyl(meth)acrylat, Butadien und ein Vinylester ist.

11. Zusammensetzung nach einem der Ansprüche 1 bis 10,
**dadurch gekennzeichnet, dass** der hydrierte Zucker 10 bis 90 Gew.-%, vorzugsweise 20 bis 85 %, vorteilhafterweise 30 bis 80 % und noch besser 45 bis 65 %, des Gemisches aus dem hydrierten Zucker und polyfunktionalem Vernetzungsmittel ausmacht.

12. Zusammensetzung nach einem der Ansprüche 1 bis 11,
**dadurch gekennzeichnet, dass** die unterphosphorige Säure 0,1 bis 10 Gewichtsteile, vorzugsweise 1 bis 5 Teile, von 100 Gewichtsteilen hydriertem Zucker und polyfunktionalem Vernetzungsmittel ausmacht.

13. Zusammensetzung nach einem der Ansprüche 1 bis 12,
**dadurch gekennzeichnet, dass** sie ferner die folgenden Zusatzstoffe in den folgenden Anteilen, berechnet auf Basis von 100 Gewichtsteilen hydriertem Zucker und polyfunktionalem Vernetzungsmittel, umfasst:

- 0 bis 5 Teile Silan, insbesondere ein Aminosilan oder ein Epoxysilan,
- 0 bis 20 Teile, vorzugsweise 4 bis 15 Teile, Öl
- 0 bis 5 Teile hydrophobes Mittel, insbesondere Silikon,
- 0 bis 20 Teile Polyol, bei dem es sich nicht um hydrierte Zucker handelt, insbesondere Glycerin oder Polyglycerin.

14. Verfahren zum Herstellen eines isolierenden Produkts auf Basis von Mineralfasern, die durch ein organisches Bindemittel gebunden sind, umfassend

- Aufbringen einer wässrigen Schlichtezusammensetzung nach einem der vorstehenden Ansprüche auf Mineralfasern,
- Verdampfen der Lösungsmittelphase der wässrigen Schlichtezusammensetzung und thermisches Härten des nichtflüchtigen Rests der Zusammensetzung.

15. Isolierendes Produkt auf Basis von Mineralfasern, die durch ein organisches Bindemittel gebunden sind, das gemäß dem Verfahren nach Anspruch 14 erhalten wird.

**Claims**

1. A binding composition for insulating products based on mineral wool, in particular rock or glass wool, **characterized in that** it comprises

- at least one hydrogenated sugar,
- at least one polyfunctional crosslinking agent chosen from polycarboxylic organic acids or salts of these acids, and anhydrides thereof, and
- hypophosphorous acid,

and which is free of reducing sugars or contains at most 10% by weight of reducing sugars, the binding composition being free of sodium hypophosphite and the hypophosphorous acid .

2. The composition as claimed in claim 1, **characterized in that** the hydrogenated sugar is chosen from the hydrogenation products of monosaccharides, oligosaccharides and polysaccharides which are linear, cyclic or branched.

3. The composition as claimed in claim 1 or 2, **characterized in that** the hydrogenated sugar is erythritol, arabitol, xylitol, sorbitol, mannitol, iditol, maltitol, isomaltitol, lactitol, cellobitol, palatinitol, maltotritol or the hydrogenation products of starch hydrolysates.

4. The composition as claimed in claim 3, **characterized in that** the hydrogenated sugar is maltitol, or a mixture comprising maltitol and hydrogenation products of starch hydrolysates, preferably containing more than 50% by weight of maltitol.

5. The binding composition as claimed in any of the preceding claims, **characterized in that** it has a solids content of between 3% and 30% by weight, preferably from 4% to 20% by weight, the hydrogenated sugar, the polyfunctional crosslinking agent and the hypophosphorous acid together representing at least 70%, preferably at least 80% of the solids of the binding composition.

6. The composition as claimed in claim 1, **characterized in that** the polycarboxylic organic acid comprises at least two carboxylic functions, preferably at most 300 carboxylic functions, advantageously at most 70 and even better still at most 15.

7. The composition as claimed in claim 6, **characterized in that** the polycarboxylic organic acid is chosen from linear, optionally branched and saturated or unsaturated nonpolymeric polycarboxylic organic acids, cyclic acids and aromatic acids.

8. The composition as claimed in claim 7, **characterized in that** the polycarboxylic organic acid is chosen from dicarboxylic acids, in particular oxalic acid, malonic acid, succinic acid, glutaric acid, adipic acid, pimelic acid, suberic acid, azelaic acid, sebacic acid, malic acid, tartaric acid, tartronic acid, aspartic acid, glutamic acid, fumaric acid, itaconic acid, maleic acid, traumatic acid, camphoric acid, phthalic acid and its derivatives, in particular containing at least one boron or chlorine atom, tetrahydrophthalic acid and its derivatives, in particular containing at least one chlorine atom, isophthalic acid, terephthalic acid, mesaconic acid and citraconic acid, tricarboxylic acids, in particular citric acid, tricarballylic acid, 1,2,4-butanetricarboxylic acid, aconitic acid, hemimellitic acid, trimellitic acid and trimesic acid; and tetracarboxylic acids, in particular 1,2,3,4-butanetetracarboxylic acid and pyromellitic acid.

9. The composition as claimed in claim 1, **characterized in that** the polycarboxylic organic acid is chosen from polymeric polycarboxylic organic acids, in particular homopolymers of unsaturated carboxylic acid or of a monoester of unsaturated dicarboxylic acid, copolymers of unsaturated carboxylic acids, and copolymers of at least one unsaturated carboxylic acid and of at least one vinyl monomer.

10. The composition as claimed in claim 9, **characterized in that** the unsaturated carboxylic acid is (meth)acrylic acid, crotonic acid, isocrotonic acid, maleic acid, cinnamic acid, 2-methylmaleic acid, fumaric acid, itaconic acid, 2-methylitaconic acid, $\alpha,\beta$-methyleneglutaric acid and monoesters of unsaturated dicarboxylic acids, and the vinyl monomer is styrene optionally substituted with alkyl, hydroxyl or sulfonyl groups, or with a halogen atom, (meth)acrylonitrile, (meth)acrylamide optionally substituted with $C_1$-$C_{10}$ alkyl groups, alkyl (meth)acrylates, glycidyl (meth)acrylate, butadiene and a vinyl ester.

11. The composition as claimed in any of claims 1 to 10, **characterized in that** the hydrogenated sugar represents 10% to 90% of the weight of the mixture consisting of the hydrogenated sugar and the polyfunctional crosslinking agent, preferably 20% to 85%, advantageously 30% to 80% and even better still 45% to 65%.

12. The composition as claimed in any of claims 1 to 11, **characterized in that** the hypophosphorous acid represents 0.1 part to 10 parts by weight per 100 parts by weight of the hydrogenated sugar and of the polyfunctional crosslinking agent, preferably 1 to 5 parts.

13. The composition as claimed in any of claims 1 to 12, **characterized in that** it also comprises the additives below in the following proportions calculated on the basis of 100 parts by weight of hydrogenated sugar and of polyfunctional crosslinking agent:

    - 0 to 5 parts of silane, in particular an aminosilane or an epoxysilane,

- 0 to 20 parts of oil, preferably 4 to 15 parts,
- 0 to 5 parts of a hydrophobic agent, in particular a silicone,
- 0 to 20 parts of a polyol other than the hydrogenated sugars, in particular glycerol or a polyglycerol.

14. A process for manufacturing an insulating product based on mineral fibers bonded by an organic binder, comprising

- the application of an aqueous binding composition as claimed in any one of the preceding claims to mineral fibers,
- the evaporation of the solvent phase of the aqueous binding composition and the thermal curing of the nonvolatile residue of the composition.

15. An insulating product based on mineral fibers bonded by an organic binder, obtained by means of the process as claimed in claim 14.

Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5340868 A
- US 5318990 A
- US 5661213 A
- US 6331350 B
- US 20030008978 A
- US 5977232 A
- US 5932689 A
- US 6071994 A
- US 6099773 A
- US 6146746 A
- US 6299936 B

- US 20020188055 A
- US 20040002567 A
- US 20050215153 A
- WO 2006120523 A
- WO 2008053332 A
- US 2013140481 A
- US 2016177057 A
- WO 2010029266 A
- WO 2013014399 A
- FR 2840071